# EUROPEAN PATENT APPLICATION

(11) **EP 3 528 406 A1**
(43) Date of publication of application: **21.08.2019**
(21) Application number: 17867530.2
(22) Date of filing: 21.08.2017
(51) Int. Cl.: H04L 1/00

(54) **TRANSMISSION CONTROL METHOD, DEVICE, AND SYSTEM, AND STORAGE MEDIUM**

(30) Priority: 03.11.2016 CN 201610959460
(71) Applicant: Huawei Technologies Co., Ltd., Longgang District Shenzhen, Guangdong 518129 (CN)
(72) Inventor: WU, Ye, Shenzhen Guangdong 518129 (CN); BI, Xiaoyan, Shenzhen Guangdong 518129 (CN)
(74) Representative: Körber, Martin Hans
(86) International application number: PCT/CN2017/098292
(87) International publication number: WO 2018/082365

(57) **Abstract**

This application discloses a transmission control method, apparatus, and system, and a storage medium, and belongs to the field of communications technologies. The method includes: generating target control format indicator information, where the target control format indicator information is used to indicate a target time-frequency resource occupied by a downlink control channel; and sending the target control format indicator information. According to this application, a problem that a time-frequency resource occupied by a downlink control channel cannot be adjusted can be resolved, and the time-frequency resource occupied by the downlink control channel can be flexibly adjusted. This application is used for transmission control.

## Description

This application claims priority to Chinese Patent Application No. 201610959460.6, filed with the Chinese Patent Office on November 3, 2016 and entitled "TRANSMISSION CONTROL METHOD AND APPARATUS", which is incorporated herein by reference in its entirety.

### TECHNICAL FIELD

This application relates to the field of communications technologies, and in particular, to a transmission control method, apparatus, and system, and a storage medium.

### BACKGROUND

A Long Term Evolution-Advanced (Long Term Evolution-Advanced, LTE-A for short) system includes user equipment (User equipment, UE for short) and a base station that serves the UE. In a communication process, the base station may deliver downlink control information (Downlink Control Information, DCI for short) to the UE, to schedule the UE.

In a related technology, the DCI is carried in a subframe sent by the base station to the UE, and the DCI is usually carried on a physical downlink control channel (Physical Downlink Control Channel, PDCCH for short). In time domain, the PDCCH occupies several orthogonal frequency division multiplexing (Orthogonal Frequency Division Multiplexing, OFDM for short) symbols in a foremost part of the subframe, and a quantity of OFDM symbols occupied by the PDCCH is indicated in control format indicator (Control Format Indicator, CFI for short) information carried on a physical control format indicator channel (Physical Control Format Indicator Channel, PCFICH for short). In frequency domain, the PDCCH occupies all subcarriers in the subframe, in other words, the PDCCH occupies all subcarriers (namely, a wideband) in an entire system bandwidth. The UE performs blind detection on the DCI carried on the PDCCH, to receive the DCI sent by the base station to the UE.

In a process of implementing this application, the inventor finds that the related technology has at least the following problem: Because the PDCCH occupies the several OFDM symbols in the foremost part of the subframe and the wideband, a time-frequency resource occupied by the PDCCH in an existing LTE standard is relatively fixed, and the time-frequency resource occupied by the PDCCH cannot be adjusted based on needs.

### SUMMARY

To resolve a problem that a time-frequency resource occupied by a PDCCH in an existing LTE standard is relatively fixed, and the time-frequency resource occupied by the PDCCH cannot be adjusted based on needs, embodiments of this application provide a transmission control method, apparatus, and system, and a storage medium. The technical solutions are as follows:

According to a first aspect, a transmission control method is provided, where the method includes:
generating target control format indicator information, where the target control format indicator information is used to indicate a target time-frequency resource occupied by a downlink control channel; and
sending the target control format indicator information.

In the transmission control method provided in this embodiment of this application, because the target control format indicator information is used to indicate the target time-frequency resource occupied by the downlink control channel, a time-frequency resource occupied by the downlink control channel can be flexibly adjusted based on the target control format indicator information.

Optionally, the target control format indicator information is used to indicate the target time-frequency resource occupied by the downlink control channel in a target transmission unit, and the sending the target control format indicator information includes:
adding the target control format indicator information to the target transmission unit; and
sending the target control format indicator information by using the target transmission unit.

According to a second aspect, a transmission control method is provided, where the method includes:
receiving target control format indicator information, where the target control format indicator information is used to indicate a target time-frequency resource occupied by a downlink control channel;
determining the target time-frequency resource based on the target control format indicator information; and
determining the downlink control channel based on the target time-frequency resource.

In the transmission control method provided in this embodiment of this application, because a receive end device receives a downlink control channel based on a target time-frequency resource indicated by a transmit end device, a time-frequency resource occupied by the downlink control channel can be flexibly adjusted based on the target control format indicator information.

Optionally, the target control format indicator information is used to indicate the target time-frequency resource occupied by the downlink control channel in a target transmission unit, and the receiving target control format indicator information includes:
receiving the target control format indicator information by using the target transmission unit.

Optionally, the determining the target time-frequency resource based on the target control format indicator information includes:
when the target transmission unit does not include the target control format indicator information, determining, as the target control format indicator information, control format indicator information in a transmission unit that is closest to the target transmission unit; and
determining the target time-frequency resource based on the target control format indicator information.

Optionally, in the first aspect and the second aspect, the target time-frequency resource includes a target time resource and a target frequency resource.

Optionally, in the first aspect and the second aspect, the target time resource includes at least one symbol, the target frequency resource includes at least one subband, and each of the at least one subband includes at least one subcarrier.

Optionally, in the first aspect and the second aspect, the at least one subband includes a subband including at least two subcarriers, and the at least two subcarriers are consecutive.

Optionally, in the first aspect and the second aspect, the at least one subband includes at least two subbands, and the at least two subbands are consecutive or inconsecutive.

Optionally, in the first aspect and the second aspect, the target frequency resource includes a system bandwidth.

Optionally, in the first aspect and the second aspect, the target frequency resource includes a system bandwidth or at least one subband, the system bandwidth is indicated by using a symbol pattern, each of the at least one subband is indicated by using a symbol pattern, and different symbol patterns indicate different subbands.

Optionally, in the first aspect and the second aspect, the target time resource includes a preset quantity of symbols in a foremost part of a transmission unit in which the target time resource is located.

Optionally, in the first aspect and the second aspect, the target time-frequency resource is a time-frequency resource shared by user equipments UEs in a target group, or the target time-frequency resource is a time-frequency resource specific to target UE.

Optionally, in the first aspect and the second aspect, the target control format indicator information is located in at least one symbol in the target transmission unit, and the at least one symbol is located in a foremost part of the target transmission unit.

Optionally, in the first aspect and the second aspect, the target control format indicator information is located on at least one subband in the target transmission unit, and each of the at least one subband includes at least one subcarrier.

Optionally, in the first aspect and the second aspect, the target control format indicator information is located on at least two subbands in the target transmission unit, and the at least two subbands are consecutive or inconsecutive.

Optionally, in the first aspect and the second aspect, the target time-frequency resource includes a target frequency resource, the target frequency resource includes at least one subband, each of the at least one subband includes at least one subcarrier, and a subcarrier on which the target control format indicator information is located is a subcarrier in the target frequency resource.

Optionally, in the first aspect and the second aspect, the target control format indicator information is located on a preset quantity of subcarriers in the target transmission unit, and a center of the preset quantity of subcarriers overlaps with a center of a frequency band of the target transmission unit.

Optionally, in the first aspect and the second aspect, the target control format indicator information is physical layer control format indicator information.

According to a third aspect, a transmission control apparatus is provided. The transmission control apparatus includes at least one module, and the at least one module is configured to implement the transmission control method provided in the first aspect or any optional manner of the first aspect.

According to a fourth aspect, a transmission control apparatus is provided. The transmission control apparatus includes at least one module, and the at least one module is configured to implement the transmission control method provided in the second aspect or any optional manner of the second aspect.

According to a fifth aspect, a transmission control system is provided. The transmission control system includes the transmission control apparatus provided in the third aspect and the transmission control apparatus provided in the fourth aspect.

According to a sixth aspect, a transmit end device is provided. The transmit end device includes a processor, a transmitter, a receiver, and a network interface. The processor, the transmitter, the receiver, and the network interface are connected by using a bus.

The processor includes one or more processing cores, and the processor runs a software program and a unit, to perform various function applications and data processing.

There may be a plurality of network interfaces, and the network interface is used by the transmit end device to communicate with another storage device or a network device.

The processor and the transmitter are configured to cooperatively implement the transmission control method provided in the first aspect or any optional manner of the first aspect.

According to a seventh aspect, a receive end device is provided. The receive end device includes a receiver, a processor, a transmitter, and a network interface. The receiver, the processor, the transmitter, and the network interface are connected by using a bus.

The processor includes one or more processing cores, and the processor runs a software program and a unit, to perform various function applications and data processing.

There may be a plurality of network interfaces, and the network interface is used by the receive end device to communicate with another storage device or a network device.

The receiver and the processor are configured to cooperatively implement the transmission control method provided in the second aspect or any optional manner of the second aspect.

According to an eighth aspect, a transmission control system is provided. The transmission control system includes the transmit end device provided in the fifth aspect and the receive end device provided in the sixth aspect.

According to a ninth aspect, a computer readable storage medium is provided. The computer readable storage medium stores an instruction, and when the computer readable storage medium runs on a computer, the computer performs the transmission control method provided in the first aspect or any optional manner of the first aspect.

According to a tenth aspect, a computer readable storage medium is provided. The computer readable storage medium stores an instruction, and when the computer readable storage medium runs on a computer, the computer performs the transmission control method provided in the second aspect or any optional manner of the second aspect.

According to an eleventh aspect, a computer program product including an instruction is provided. When the computer program product runs on a computer, the computer performs the transmission method provided in the first aspect or any optional manner of the first aspect.

According to a twelfth aspect, a computer program product including an instruction is provided. When the computer program product runs on a computer, the computer performs the transmission method provided in the second aspect or any optional manner of the second aspect.

Beneficial effects of the technical solutions provided in the embodiments of this application are as follows:

According to the transmission control method, apparatus, and system, and the storage medium that are provided in the embodiments of this application, the transmit end device generates the target control format indicator information and sends the target control format indicator information to the receive end device, where the target control format indicator information is used to indicate the target time-frequency resource occupied by the downlink control channel. The receive end device determines the target time-frequency resource based on the target control format indicator information, and further determines the downlink control channel based on the target time-frequency resource. Because the target control format indicator information is used to indicate the target time-frequency resource occupied by the downlink control channel, a time-frequency resource occupied by the downlink control channel can be flexibly adjusted based on the target control format indicator information, to resolve the problem that the time-frequency resource occupied by the downlink control channel cannot be adjusted, and flexibly adjust the time-frequency resource occupied by the downlink control channel.

It should be understood that the foregoing general descriptions and the following detailed descriptions are merely used as an example, and cannot limit this application.

### BRIEF DESCRIPTION OF DRAWINGS

FIG. 1 is a schematic diagram of an implementation environment according to an embodiment of this application;
FIG. 2 is a schematic diagram of a logical structure of a transmission unit according to an embodiment of this application;
FIG. 3 is a flowchart of a transmission control method according to an embodiment of this application;
FIG. 4 is a schematic diagram of distribution of a target time-frequency resource according to an embodiment of this application;
FIG. 5 is another schematic diagram of distribution of a target time-frequency resource according to an embodiment of this application;
FIG. 6 is still another schematic diagram of distribution of a target time-frequency resource according to an embodiment of this application;
FIG. 7 is yet another schematic diagram of distribution of a target time-frequency resource according to an embodiment of this application;
FIG. 8 is yet another schematic diagram of distribution of a target time-frequency resource according to an embodiment of this application;
FIG. 9 is yet another schematic diagram of distribution of a target time-frequency resource according to an embodiment of this application;
FIG. 10 is yet another schematic diagram of distribution of a target time-frequency resource according to an embodiment of this application;
FIG. 11 is a schematic diagram of control format indicator information and a codeword according to an embodiment of this application;
FIG. 12 is a block diagram of a transmission control apparatus according to an embodiment of this application;
FIG. 13 is a block diagram of another transmission control apparatus according to an embodiment of this application;
FIG. 14 is a schematic structural diagram of a transmit end device according to an embodiment of this application;
FIG. 15 is a schematic structural diagram of a receive end device according to an embodiment of this application; and
FIG. 16 is a schematic structural diagram of a transmission control system according to an embodiment of this application.

The accompanying drawings herein are incorporated into this specification and constitute one part of this specification, show embodiments conforming to this application, and are used, together with this specification, to explain the principle of this application.

### DESCRIPTION OF EMBODIMENTS

In an LTE-A system, a PCFICH is used to carry CFI information, the CFI information is used to indicate a quantity of OFDM symbols occupied by a PDCCH in time domain, and a bit pattern (bit pattern) represented by the CFI information carried on the PCFICH is used to indicate different quantities of OFDMs. In the LTE-A system, a bandwidth occupied by the PDCCH in frequency domain is a wideband (wideband), in other words, the bandwidth occupied by the PDCCH in frequency domain is a system bandwidth. Therefore, there is no need to indicate whether the PDCCH occupies a subband (subband) in frequency domain, or indicate a specific location of a subband.

In a 5th Generation (Fifth Generation, 5G for short) system, different time-frequency resources for carrying need to be set for the PDCCH. It should be noted that this application involves a downlink control channel, a control format indicator channel, and a downlink shared channel. For ease of description, this application is described by using an example in which the downlink control channel is represented by using the PDCCH, the control format indicator channel is represented by using the PCFICH, and the downlink shared channel is represented by using a physical downlink shared channel (Physical Downlink Shared Channel, PDSCH for short). However, a person skilled in the art should understand that in the technical solutions provided in this application, the downlink control channel may be the same as the PDCCH in an existing communications standard, or may include another function besides functions of the existing PDCCH, or may have only some functions of the existing PDCCH, or may include another function besides some functions, where the existing PDCCH does not have the another function. The control format indicator channel may be the same as the PCFICH in the existing communications standard, or may include another function besides functions of the existing PCFICH, or may have only some functions of the existing PCFICH, or may include another function besides some functions, where the existing PCFICH does not have the another function. The downlink shared channel may be the same as the PDSCH in the existing communications standard, or may include another function besides functions of the existing PDSCH, or may have only some functions of the existing PDSCH, or may include another function besides some functions, where the existing PDSCH does not have the another function. This is not limited in this application.

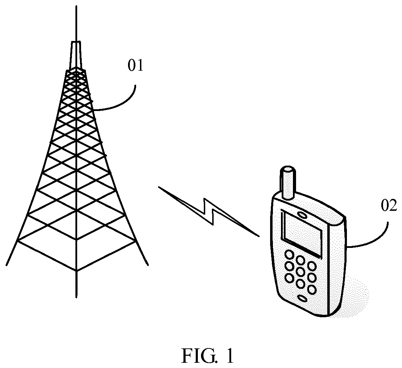

FIG. 1 is a schematic diagram of an implementation environment according to an embodiment of this application. The implementation environment provides a wireless communications system. The implementation environment may include a transmit end device 01 and a receive end device 02. The transmit end device 01 may be an access network device, and the receive end device 02 may be user equipment.

The access network device is but is not limited to, for example, a base transceiver station (Base Transceiver Station, BTS for short) in a Global System for Mobile Communications (Global System for Mobile Communications, GSM for short) system; an NB (NodeB) in a Wideband Code Division Multiple Access (Wideband Code Division Multiple Access, WCDMA for short) system; an evolved NodeB (evolved NodeB, eNB for short), a relay station, an in-vehicle device, or a wearable device in a Long Term Evolution (Long Term Evolution, LTE for short) system; an access network device in a future 5G system; or an access network device in a future evolved public land mobile network (Public Land Mobile Network, PLMN for short) network.

In this implementation environment and the following embodiments, the user equipment is described as general UE. In addition, the user equipment may be a mobile station, an access terminal, a subscriber unit, a subscriber station, a mobile, a remote station, a remote terminal, a mobile device, a user terminal, a terminal, a wireless communications device, a user agent, a user apparatus, or the like. The user equipment may be a cellular phone, a cordless phone, a Session Initiation Protocol (Session Initiation Protocol, SIP for short) phone, a wireless local loop (Wireless Local Loop, WLL for short) station, a personal digital assistant (Personal Digital Assistant, PDA for short), a handheld device having a wireless communication function, a computing device or another processing device connected to a wireless modem, an in-vehicle device, a wearable device, a mobile station in a future 5G network, a terminal device in a future evolved PLMN network, or the like. In addition, the user equipment may further include another device that can communicate with the access network device (for example, a base station), for example, a relay (Relay).

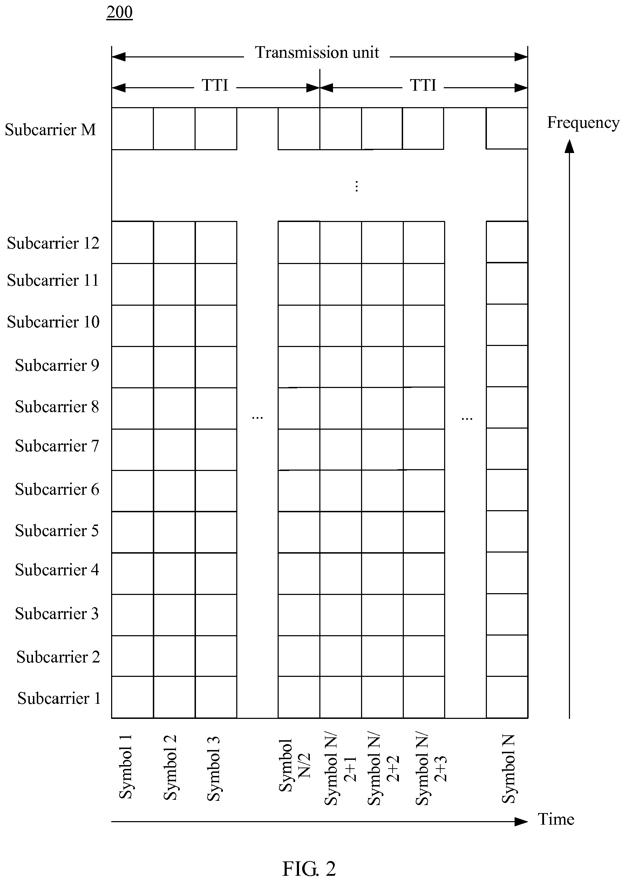

In this implementation environment and the following embodiments, a communication connection is established between the transmit end device 01 and the receive end device 02, and communication may be implemented through the communication connection. In a wireless communications system, the communication connection is usually a wireless connection. Information transmitted between the transmit end device 01 and the receive end device 02 during communication may include but is not limited to control format indicator information, control information, data information, and the like. The control format indicator information is, for example, CFI information in the LTE. The control information is, for example, DCI in the LTE. The transmit end device 01 may transmit information to the receive end device 02 through a channel. The channel may be carried on a time-frequency resource. For example, the transmit end device 01 may transmit downlink control information to the receive end device 02 through a downlink control channel. The downlink control channel may be carried on a time-frequency resource in a transmission unit. The transmit end device 01 may map the downlink control information to the time-frequency resource that is occupied by the downlink control channel in the transmission unit, and send the downlink control information to the receive end device 02 by using the time-frequency resource. The receive end device 02 may perform blind detection on the downlink control information on the time-frequency resource that is occupied by the downlink control channel in the transmission unit, to receive the downlink control information that is sent by the transmit end device 01 to the receive end device 02. The transmission unit may be shown in FIG. 2.

FIG. 2 is a schematic diagram of a logical structure of a transmission unit 200 according to an embodiment of this application. The transmission unit 200 is equivalent to a physical resource block (Physical Resource Block, PRB for short), a PRB pair (a PRB pair), or a subframe in the existing LTE system. Referring to FIG. 2, the transmission unit 200 includes N symbols (Symbols) in time domain and M subcarriers (Subcarrier) in frequency domain. The symbol may be an OFDM symbol. M and N are both positive integers, and specific values of M and N may be set based on needs. For example, in the LTE, the value of N may be equal to 12 or 14. The transmission unit 200 includes two TTIs. Each TTI is equivalent to one slot in the LTE system, and each TTI includes N/2 symbols. A minimum resource unit in the transmission unit 200 is a resource element (Resource Element, RE for short), and each resource element includes one symbol in time domain and one subcarrier in frequency domain.

It should be noted that for ease of description, the transmission unit 200 shown in FIG. 2 uses a subframe structure in the LTE system. However, a person skilled in the art should understand that the transmission unit 200 may use another structure. For example, a quantity of time-frequency resources in the transmission unit 200, a quantity of symbols included in the transmission unit 200, a quantity of subcarriers included in the transmission unit 200, and the like may be set based on specific needs. It should be further noted that the symbol in this embodiment of this application may use another naming manner, for example, a time unit, the subcarrier in this embodiment of this application may use another naming manner, for example, a frequency unit, and the transmission unit 200 in this embodiment of this application may use another naming manner, for example, a resource unit. This is not limited in this embodiment of this application.

In a related technology, a base station (for example, the transmit end device 01 in FIG. 1) may deliver DCI to UE (for example, the receive end device 02 in FIG. 1) by using a subframe. The DCI is carried on a PDCCH, the PDCCH is located in the subframe, and a bandwidth occupied by the PDCCH in the subframe is a wideband. The UE performs blind detection on the PDCCH in the subframe, to receive the downlink control information. However, because the bandwidth occupied by the PDCCH in the subframe is the wideband, a time-frequency resource occupied by the PDCCH is relatively fixed, and the time-frequency resource occupied by the PDCCH cannot be adjusted based on needs.

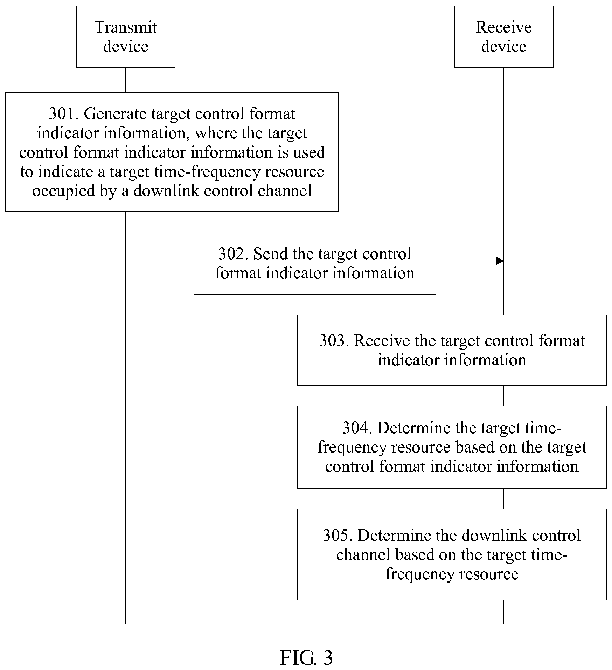

FIG. 3 is a flowchart of a transmission control method according to an embodiment of this application. The transmission control method may be applied to the implementation environment shown in FIG. 1, and used to transmit downlink control information between the transmit end device 01 and the receive end device 02. This embodiment of this application is described by using an example in which the transmit end device 01 is a base station and the receive end device 02 is UE. Referring to FIG. 3, the transmission control method includes the following steps.

Step 301: The transmit end device generates target control format indicator information, where the target control format indicator information is used to indicate a target time-frequency resource occupied by a downlink control channel.

The target control format indicator information is used to indicate the target time-frequency resource occupied by the downlink control channel. Optionally, the target control format indicator information is used to indicate the target time-frequency resource occupied by the downlink control channel in a target transmission unit. The target transmission unit may be a transmission unit carrying downlink control information. The target transmission unit is but is not limited to, for example, a subframe in LTE. The target control format indicator information may be physical layer control format indicator information. The target control format indicator information is but is not limited to, for example, CFI information in the LTE. The control format indicator information is usually carried on a control format indicator channel. The control format indicator channel is but is not limited to, for example, a PCFICH in the LTE. The downlink control information is but is not limited to, for example, DCI information in the LTE. The downlink control information is usually carried on the downlink control channel. The transmit end device may first determine the target time-frequency resource occupied by the downlink control channel in the target transmission unit, and then generate the target control format indicator information used to indicate the target time-frequency resource.

The target time-frequency resource may include a target time resource and a target frequency resource. Time resources are a symbol 1 to a symbol N in the transmission unit 200 shown in FIG. 2, and each of the symbol 1 to the symbol N may be one time resource. Frequency resources are a subcarrier 1 to a subcarrier M in the transmission unit 200 shown in FIG. 2, and each of the subcarrier 1 to the subcarrier M may be one frequency resource. The target time resource may include at least one symbol in the symbol 1 to the symbol N, and the target frequency resource may include at least one subcarrier in the subcarrier 1 to the subcarrier M.

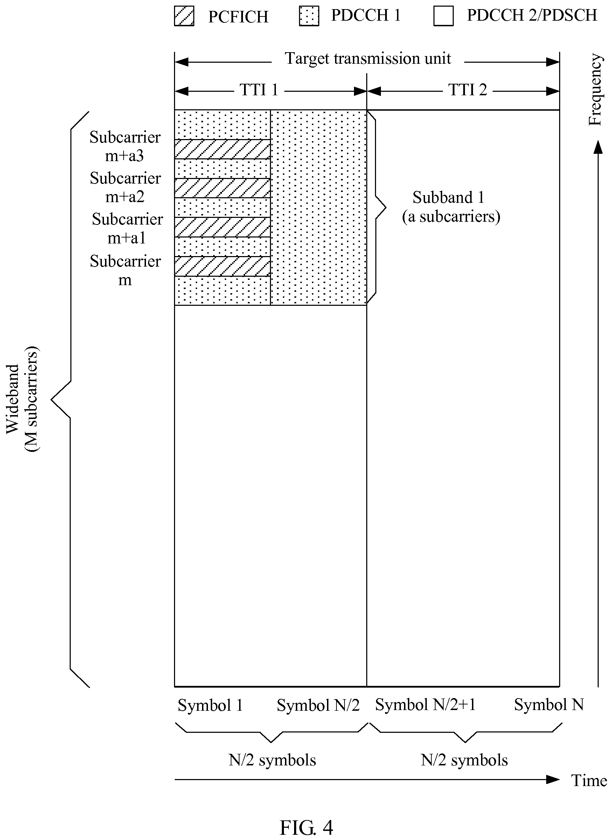

Optionally, in this embodiment of this application, the target time resource includes a preset quantity of symbols in a foremost part of the transmission unit in which the target time resource is located, and the transmission unit in which the target time resource is located may be the target transmission unit. Therefore, the target time resource includes the preset quantity of symbols in the foremost part of the target transmission unit. For example, the target time resource includes at least one symbol in the foremost part of the target transmission unit. For a structure of the target transmission unit, refer to the transmission unit 200 shown in FIG. 2. For example, FIG. 4 to FIG. 10 are various schematic diagrams of possible distribution of the target time-frequency resource in the target transmission unit according to this embodiment of this application. In FIG. 4 to FIG. 10, a time-frequency resource occupied by a PDCCH 1 is the target time-frequency resource indicated in the target control format indicator information, and the time-frequency resource occupied by the PDCCH 1 is used to carry downlink control information. In addition to the target time-frequency resource, the target transmission unit further includes another time-frequency resource. Specifically, as shown in FIG. 4 to FIG. 10, the target transmission unit further includes a time-frequency resource occupied by a PCFICH and a time-frequency resource occupied by a PDCCH 2/PDSCH. The time-frequency resource occupied by the PCFICH is used to carry the target control format indicator information, the time-frequency resource occupied by the PDSCH is used to carry data information, the time-frequency resource occupied by the PDCCH 2 is used to carry downlink control information, and the time-frequency resource occupied by the PDCCH 2 is not the time-frequency resource indicated in the target control format indicator information, in other words, the time-frequency resource occupied by the PDCCH 2 is not the target time-frequency resource. As shown in FIG. 4 to FIG. 10, the target time resource includes the preset quantity of symbols in the foremost part of the target transmission unit, and when the preset quantity is greater than 2, the preset quantity of symbols are consecutive. Optionally, as shown in FIG. 4 to FIG. 10, the target time resource includes N/2 consecutive symbols in the foremost part of the target transmission unit. In other words, the target transmission units shown in FIG. 4 to FIG. 10 each include two TTIs: a TTI 1 and a TTI 2, and the TTI 1 is located before the TTI 2. The target time resource includes all symbols in the TTI 1. The TTI 1 and the TTI 2 each are equivalent to one slot in the LTE system.

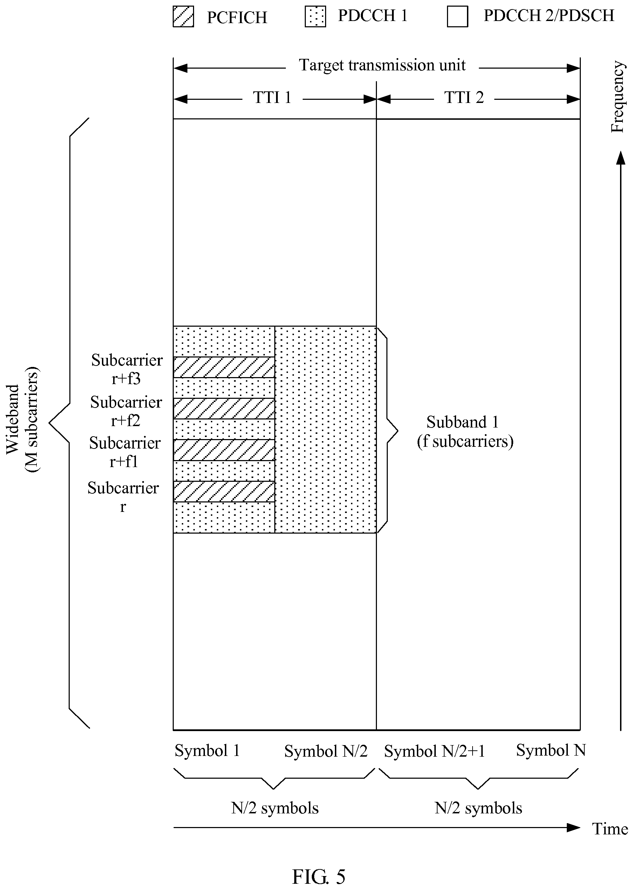

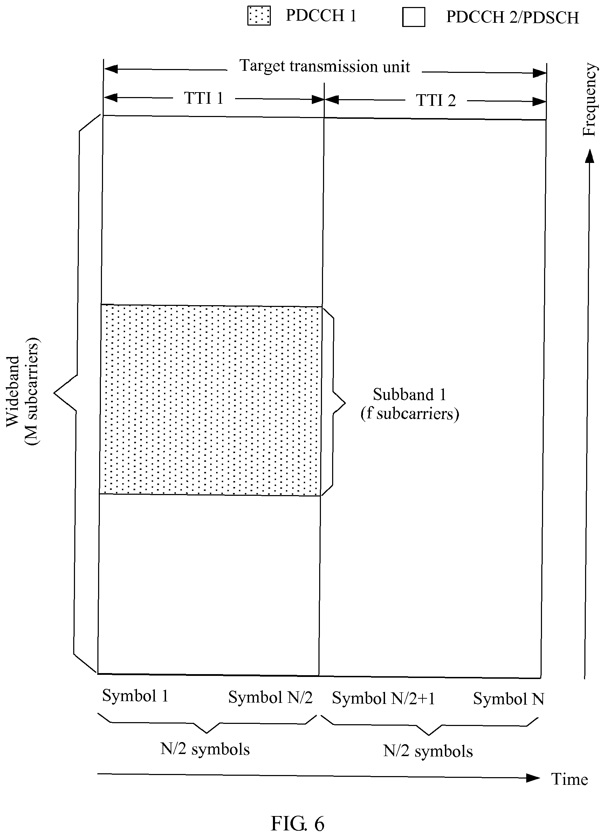

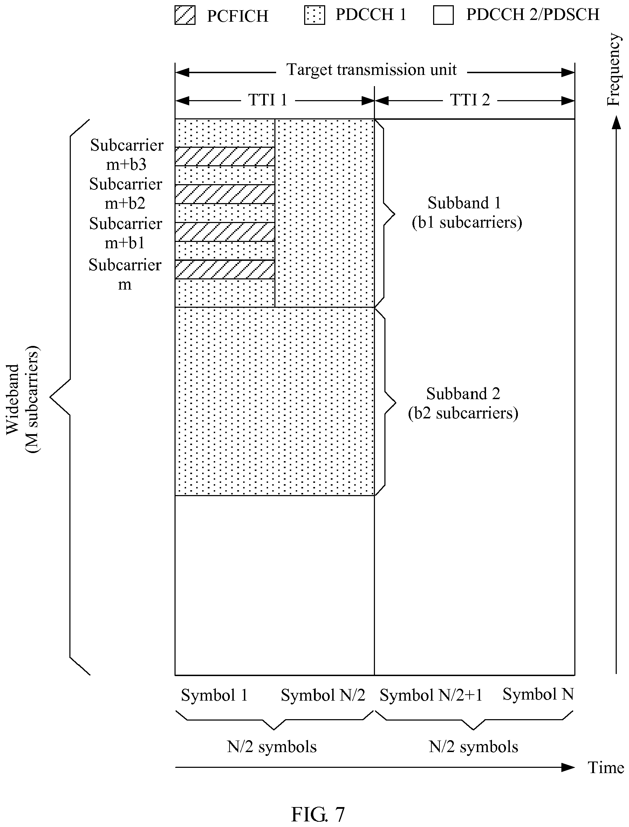

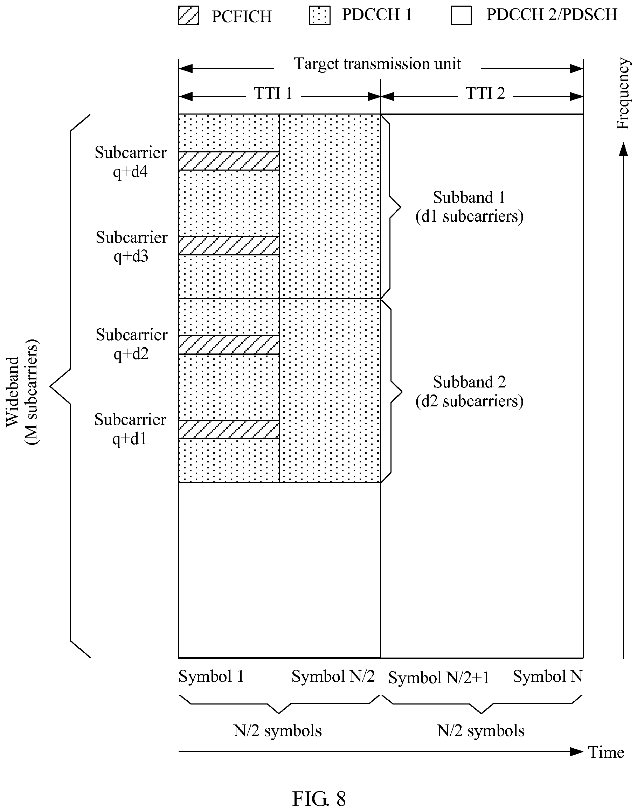

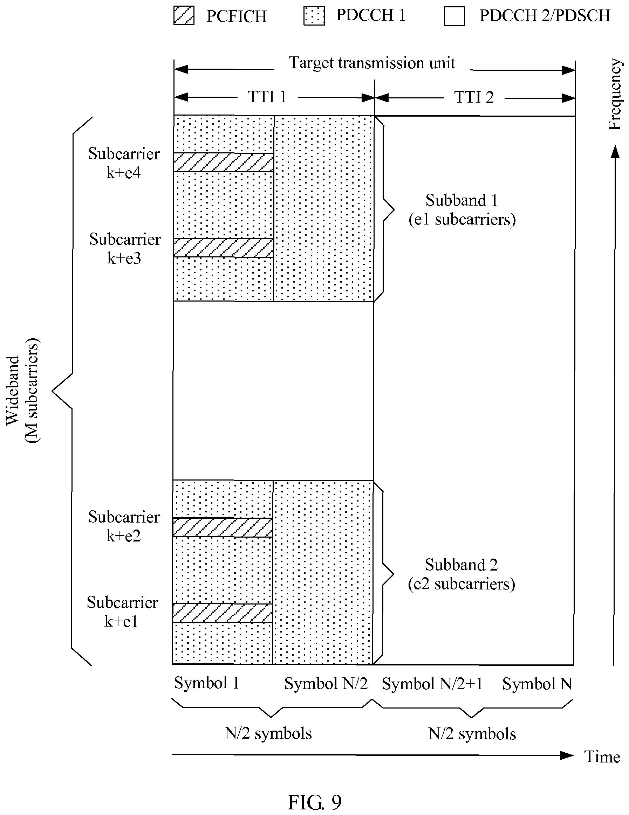

Optionally, in this embodiment of this application, the target time-frequency resource includes the target frequency resource, the target frequency resource includes at least one subband, each of the at least one subband includes at least one subcarrier, and when the at least one subband includes a subband including at least two subcarriers, the subcarriers in the subband including at least two subcarriers are consecutive. For example, as shown in FIG. 4 to FIG. 6, the target frequency resource in the target time-frequency resource includes a subband 1. In the target transmission unit shown in FIG. 4, the subband 1 includes consecutive subcarriers. In the target transmission units shown in FIG. 5 and FIG. 6, the subband 1 includes f consecutive subcarriers. Alternatively, as shown in FIG. 7 to FIG. 9, the target frequency resource in the target time-frequency resource includes two subbands: a subband 1 and a subband 2. In the target transmission unit shown in FIG. 7, the subband 1 includes b1 consecutive subcarriers, and the subband 2 includes b2 consecutive subcarriers. In the target transmission unit shown in FIG. 8, the subband 1 includes d1 consecutive subcarriers, and the subband 2 includes d2 consecutive subcarriers. In the target transmission unit shown in FIG. 9, the subband 1 includes e1 consecutive subcarriers, and the subband 2 includes e2 consecutive subcarriers.

Optionally, in this embodiment of this application, the target frequency resource includes at least two subbands, and the at least two subbands are consecutive or inconsecutive. For example, as shown in FIG. 7 to FIG. 9, the target frequency resource in the target time-frequency resource includes two subbands: a subband 1 and a subband 2. In the target transmission units shown in FIG. 7 and FIG. 8, the subband 1 and the subband 2 are consecutive. In the target transmission unit shown in FIG. 9, the subband 1 and the subband 2 are inconsecutive.

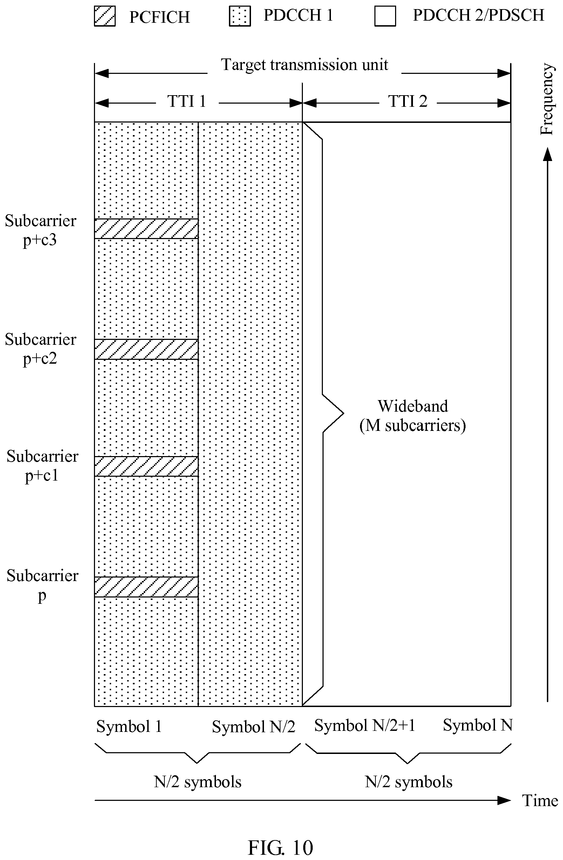

Optionally, in this embodiment of this application, the target frequency resource includes a system bandwidth. The system bandwidth usually includes all subcarriers in a transmission unit, and the transmission unit may be the target transmission unit. Therefore, the target frequency resource includes all subcarriers in the target transmission unit. For example, as shown in FIG. 10, the target frequency resource in the target time-frequency resource includes a system bandwidth, the target transmission unit includes M subcarriers, and the target frequency resource includes the M subcarriers.

Optionally, in this embodiment of this application, the target time-frequency resource may be a time-frequency resource shared by UEs in a target group, or the target time-frequency resource is a time-frequency resource specific to target UE. For example, as shown in FIG. 4 to FIG. 6, the subband 1 may be shared by UEs in a target group, or may be specific to target UE. Alternatively, as shown in FIG. 7 to FIG. 9, the subband 1 and the subband 2 may be shared by UEs in a target group, or may be specific to target UE. Alternatively, as shown in FIG. 10, a wideband may be shared by UEs in a target group, or may be specific to target UE.

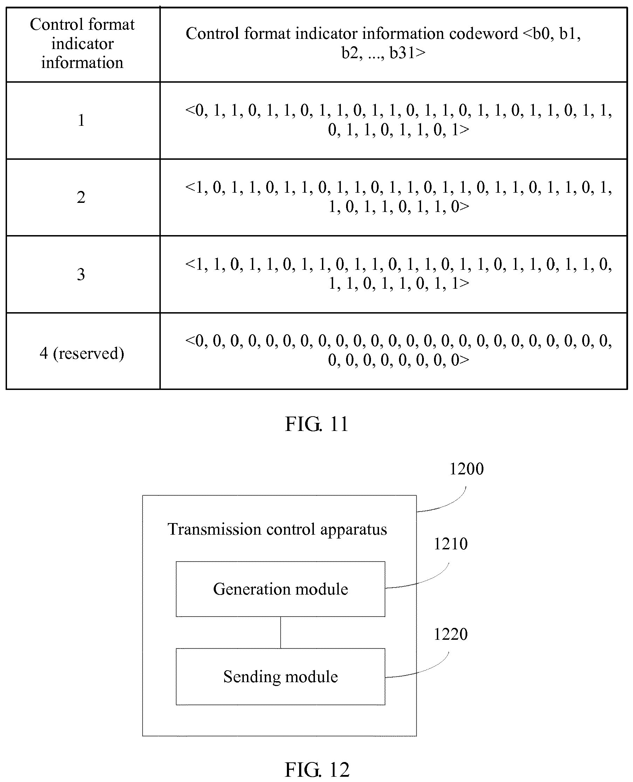

Optionally, in this embodiment of this application, the system bandwidth may be indicated by using a symbol pattern, each of the at least one subband may be indicated by using a symbol pattern, and different symbol patterns indicate different subbands. In other words, the target control format indicator information in this embodiment of this application may be a symbol pattern. The symbol pattern may be a bitmap (bitmap). The bitmap may be represented by using a codeword. A first bit in the codeword may be used to indicate a system bandwidth or a subband, and a remaining bit is used to indicate a time-frequency resource in which the subband is located. Alternatively, when the at least two subbands are consecutive subbands, a remaining bit is used to indicate a time-frequency resource in which a first subband is located and a time-frequency resource in which the last subband is located. Alternatively, the target control format indicator information may be represented by using a pattern. This is not limited in this embodiment of this application. For example, FIG. 11 is a diagram of a correspondence between control format indicator information and a control format indicator information codeword in this embodiment of this application. The control format indicator information may be the target control format indicator information, and the control format indicator information may be specifically 1, 2, 3, 4, or the like. Referring to FIG. 11, the control format indicator information 1 corresponds to a control format indicator information codeword <0, 1, 1, 0, 1, 1,0, 1, 1, 0, 1, 1, 0, 1, 1, 0, 1, 1, 0, 1, 1, 0, 1, 1, 0, 1, 1, 0, 1, 1, 0, 1>, the control format indicator information 2 corresponds to a control format indicator information codeword <1, 0, 1, 1, 0, 1, 1, 0, 1, 1, 0, 1, 1, 0, 1, 1, 0, 1, 1, 0, 1, 1, 0, 1, 1, 0, 1, 1, 0, 1, 1, 0>, the control format indicator information 3 corresponds to a control format indicator information codeword <1, 1, 0, 1, 1, 0, 1, 1, 0, 1, 1, 0, 1, 1, 0, 1, 1, 0, 1, 1, 0, 1, 1, 0, 1, 1, 0, 1, 1, 0, 1, 1>, and the control format indicator information 4 corresponds to a control format indicator information codeword <0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0>. A first bit in the codeword may be used to indicate the system bandwidth or the subband. For example, when the first bit is 0, it indicates that the target frequency resource in the target time-frequency resource indicated in the target control format indicator information includes the system bandwidth, or when the first bit is 1, it indicates that the target frequency resource in the target time-frequency resource indicated in the target control format indicator information includes the subband. Remaining bits in the codeword are used to indicate a time-frequency resource in which the subband is located. For example, in the control format indicator information codeword <1, 0, 1, 1, 0, 1, 1,0, 1, 1, 0, 1, 1, 0, 1, 1, 0, 1, 1, 0, 1, 1, 0, 1, 1, 0, 1, 1, 0, 1, 1, 0> corresponding to the control format indicator information 2, a first bit is 1. Therefore, a target frequency resource in a target time-frequency resource indicated in the control format indicator information 2 includes a subband, and remaining bits 0, 1, 1, 0, 1, 1, 0, 1, 1, 0, 1, 1, 0, 1, 1, 0, 1, 1, 0, 1, 1, 0, 1, 1, 0, 1, 1, 0, 1, 1, 0 in the codeword are used to indicate a time-frequency resource in which the subband is located. It should be noted that the control format indicator information shown in FIG. 11 includes reserved control format indicator information, the reserved control format indicator information may be used to indicate other information or another time-frequency resource, and the control format indicator information codeword in FIG. 11 may include redundancy, to ensure transmission reliability of the downlink control information.

It should be noted that the subband in this embodiment of this application is merely an example. In actual application, a size of the subband may be set based on an actual status, and the size of the subband may be customized for the downlink control channel, or may be consistent with that of a data channel (for example, a PDSCH). This is not limited in this embodiment of this application.

Step 302: The transmit end device sends the target control format indicator information to the receive end device.

After generating the target control format indicator information, the transmit end device may send the target control format indicator information to the receive end device. The target control format indicator information is used to indicate the target time-frequency resource occupied by the downlink control channel in the target transmission unit. In this embodiment of this application, the target control format indicator information may be carried on the control format indicator channel, the control format indicator channel is but is not limited to, for example, a PCFICH in the LTE, and the control format indicator channel may be located in the target transmission unit. The transmit end device may map the target control format indicator information to the control format indicator channel in the target transmission unit, and send the target control format indicator information by using the target transmission unit.

Optionally, in this embodiment of this application, the control format indicator channel may occupy at least one symbol in the target transmission unit, the target control format indicator information may be located in the at least one symbol in the target transmission unit, and the at least one symbol may be located in the foremost part of the target transmission unit. Therefore, the transmit end device may map the target control format indicator information to the at least one symbol that is occupied by the control format indicator channel in the target transmission unit, and then send the target control format indicator information by using the target transmission unit. For example, referring to FIG. 4, FIG. 5, and FIG. 7 to FIG. 10, a time-frequency resource occupied by the PCFICH includes at least one symbol in the target transmission unit, and the at least one symbol may be located in the foremost part of the target transmission unit. The target control format indicator information may be located on the time-frequency resource occupied by the PCFICH. For example, as shown in FIG. 4, FIG. 5, and FIG. 7 to FIG. 10, the PCFICH is located in N/4 symbols in the foremost part of the target transmission unit, and the transmit end device may map the target control format indicator information to the N/4 symbols. It should be noted that FIG. 4, FIG. 5, and FIG. 7 to FIG. 10 are merely examples. In actual application, a quantity of symbols occupied by the PCFICH may be set based on an actual status. For example, the PCFICH may occupy one symbol or two symbols in the foremost part of the target transmission unit. This is not limited in this embodiment of this application.

Optionally, in this embodiment of this application, the control format indicator channel occupies a first symbol in the target transmission unit, and the target control format indicator information is located in the first symbol in the target transmission unit. Therefore, the transmit end device may map the target control format indicator information to the first symbol, and send the target control format indicator information by using the target transmission unit. For example, as shown in FIG. 4, FIG. 5, and FIG. 7 to FIG. 10, the first symbol in the target transmission unit may be a symbol 1. Therefore, the PCFICH may occupy a symbol 1 in the target transmission unit shown in any one of FIG. 4, FIG. 5, and FIG. 7 to FIG. 10. The transmit end device may map the target control format indicator information to the symbol 1 in the target transmission unit shown in any one of FIG. 4, FIG. 5, and FIG. 7 to FIG. 10. This is not limited in this embodiment of this application.

Optionally, in this embodiment of this application, the control format indicator channel may occupy at least one subband in the target transmission unit, the target control format indicator information is located on the at least one subband in the target transmission unit, and each of the at least one subband includes at least one subcarrier. For example, as shown in FIG. 4, FIG. 5, or FIG. 7, the control format indicator channel occupies the subband 1 in the target transmission unit, and the control format indicator channel is discretely distributed in the subband 1. In the target transmission unit shown in FIG. 4, the control format indicator channel is distributed on four subcarriers in the subband 1: a subcarrier m, a subcarrier m+al, a subcarrier m+a2, and a subcarrier m+a3. In the target transmission unit shown in FIG. 5, the control format indicator channel is distributed on four subcarriers in the subband 1: a subcarrier r, a subcarrier r+f1, a subcarrier r+f2, and a subcarrier r+f3. In the target transmission unit shown in FIG. 7, the control format indicator channel is distributed on four subcarriers in the subband 1: a subcarrier m, a subcarrier m+b1, a subcarrier m+b2, and a subcarrier m+b3. For example, as shown in FIG. 8 or FIG. 9, the control format indicator channel occupies the subband 1 and the subband 2 in the target transmission unit, and the control format indicator channel is discretely distributed in the subband 1 and the subband 2. In the target transmission unit shown in FIG. 8, the control format indicator channel is distributed on four subcarriers: a subcarrier q+d3 and a subcarrier q+d4 in the subband 1, and a subcarrier q+d1 and a subcarrier q+d2 in the subband 2. In the target transmission unit shown in FIG. 9, the control format indicator channel is distributed on four subcarriers: a subcarrier k+e3 and a subcarrier k+e4 in the subband 1, and a subcarrier k+e1 and a subcarrier k+e2 in the subband 2. The target control format indicator information may be carried on the control format indicator channel, and schematic diagrams of distribution may be shown in FIG. 4, FIG. 5, and FIG. 7 to FIG. 9.

Optionally, in this embodiment of this application, the control format indicator channel may occupy at least two subbands in the target transmission unit, the target control format indicator information is located on the at least two subbands in the target transmission unit, and the at least two subbands are consecutive or inconsecutive. For example, as shown in FIG. 8, the control format indicator channel occupies two consecutive subbands in the target transmission unit: the subband 1 and the subband 2. Alternatively, as shown in FIG. 9, the control format indicator channel occupies two inconsecutive subbands in the target transmission unit: the subband 1 and the subband 2. Therefore, in the target transmission unit shown in FIG. 8, the target control format indicator information is located on the consecutive subband 1 and subband 2 in the target transmission unit, and in the target transmission unit shown in FIG. 9, the target control format indicator information is located on the inconsecutive subband 1 and subband 2 in the target transmission unit.

Optionally, in this embodiment of this application, the control format indicator channel occupies the system bandwidth in the target transmission unit, the target control format indicator information is located in the system bandwidth in the target transmission unit, and the system bandwidth includes all subcarriers in the target transmission unit. For example, as shown in FIG. 10, the control format indicator channel is discretely distributed in the system bandwidth in the target transmission unit, and is distributed in four subcarriers in the system bandwidth: a subcarrier p, a subcarrier p+c1, a subcarrier p+c2, and a subcarrier p+c3.

Optionally, in this embodiment of this application, a subcarrier occupied by the control format indicator channel may be a subcarrier in the target frequency resource. Because the target control format indicator information is carried on the control format indicator channel, the subcarrier on which the target control format indicator information is located is the subcarrier in the target frequency resource. For example, as shown in FIG. 4, subcarriers occupied by the control format indicator channel are the subcarrier m, the subcarrier m+a1, the subcarrier m+a2, and the subcarrier m+a3, and the subcarrier m, the subcarrier m+a1, the subcarrier m+a2, and the subcarrier m+a3 are subcarriers in the target frequency resource (the subband 1). Alternatively, as shown in FIG. 5, subcarriers occupied by the control format indicator channel are the subcarrier r, the subcarrier r+f1, the subcarrier r+f2, and the subcarrier r+f3, and the subcarrier r, the subcarrier r+f1, the subcarrier r+f2, and the subcarrier r+f3 are subcarriers in the target frequency resource (the subband 1). Alternatively, as shown in FIG. 7, subcarriers occupied by the control format indicator channel are the subcarrier m, the subcarrier m+b1, the subcarrier m+b2, and the subcarrier m+b3, and the subcarrier m, the subcarrier m+b1, the subcarrier m+b2, and the subcarrier m+b3 are subcarriers in the target frequency resource (the subband 1). Alternatively, as shown in FIG. 8, subcarriers occupied by the control format indicator channel are the subcarrier q+d1, the subcarrier q+d2, the subcarrier q+d3, and the subcarrier q+d4; the subcarrier q+d1, the subcarrier q+d2, the subcarrier q+d3, and the subcarrier q+d4 are subcarriers in the target frequency resource; the subcarrier q+d1 and the subcarrier q+d2 are subcarriers in the subband 2; and the subcarrier q+d3 and the subcarrier q+d4 are subcarriers in the subband 1. Alternatively, as shown in FIG. 9, subcarriers occupied by the control format indicator channel are the subcarrier k+e1, the subcarrier k+e2, the subcarrier k+e3, and the subcarrier k+e4; the subcarrier k+e1, the subcarrier k+e2, the subcarrier k+e3, and the subcarrier k+e4 are subcarriers in the target frequency resource; the subcarrier k+e1 and the subcarrier k+e2 are subcarriers in the subband 2; and the subcarrier k+e3 and the subcarrier k+e4 are subcarriers in the subband 1. Alternatively, as shown in FIG. 10, subcarriers occupied by the control format indicator channel are the subcarrier p, the subcarrier p+c1, the subcarrier p+c2, and the subcarrier p+c3, and the subcarrier p, the subcarrier p+c1, the subcarrier p+c2, and the subcarrier p+c3 are subcarriers in the target frequency resource (the system bandwidth).

Optionally, in this embodiment of this application, the control format indicator channel may occupy a preset quantity of subcarriers in the target transmission unit, the target control format indicator information is located on the preset quantity of subcarriers in the target transmission unit, and a center of the preset quantity of subcarriers overlaps with a center of a frequency band of the target transmission unit. In other words, the control format indicator channel is mainly distributed around the center of the frequency band of the target transmission unit. As shown in FIG. 5, the control format indicator channel is located on the subcarrier r, the subcarrier r+f1, the subcarrier r+f2, and the subcarrier r+f3 in the target transmission unit; a center of the subcarrier r, the subcarrier r+f1, the subcarrier r+f2, and the subcarrier r+f3 may be a subcarrier M/2; the center of the frequency band of the target transmission unit may be the subcarrier M/2; and the center of the subcarrier r, the subcarrier r+f1, the subcarrier r+f2, and the subcarrier r+f3 overlaps with the center of the frequency band of the target transmission unit.

Optionally, in this embodiment of this application, the control format indicator channel may be alternatively discretely located in the target transmission unit, and the control format indicator channel may be discretely located in the target transmission unit in a form of an RE group. In this case, a distribution status of the control format indicator channel in the target transmission unit is similar to that in the LTE. Details are not described in this embodiment of this application.

It should be noted that in the target transmission unit shown in FIG. 4, the subcarrier m may carry both the control format indicator channel and the downlink control channel, the subcarrier m+a1 may carry both the control format indicator channel and the downlink control channel, the subcarrier m+a2 may carry both the control format indicator channel and the downlink control channel, and the subcarrier m+a3 may carry both the control format indicator channel and the downlink control channel. FIG. 5 and FIG. 7 to FIG. 10 are similar, and details are not described in this embodiment of this application again.

Step 303: The receive end device receives the target control format indicator information sent by the transmit end device.

When the transmit end device sends the target control format indicator information to the receive end device, the receive end device may receive the target control format indicator information sent by the transmit end device. The target control format indicator information is used to indicate the target time-frequency resource occupied by the downlink control channel. Specifically, the receive end device may receive the target transmission unit, and then obtain the target control format indicator information on the control format indicator channel in the target transmission unit. A time-frequency resource occupied by the control format indicator channel in the target transmission unit is pre-agreed between the transmit end device and the receive end device. The receive end device may receive the target transmission unit, then determine the control format indicator channel in the target transmission unit based on an agreement between the receive end device and the transmit end device, and obtain the target control format indicator information from the control format indicator channel. Details are not described in this embodiment of this application. The transmit end device and the receive end device agree on the time-frequency resource occupied by the control format indicator channel in the target transmission unit, to ensure effective receiving of the downlink control information.

Step 304: The receive end device determines the target time-frequency resource based on the target control format indicator information.

After receiving the target control format indicator information sent by the transmit end device, the receive end device may determine the target time-frequency resource based on the target control format indicator information. Because the target control format indicator information indicates the target time-frequency resource, after obtaining the target control format indicator information, the receive end device may directly determine the target time-frequency resource based on the target control format indicator information. The target time-frequency resource is a time-frequency resource in the target transmission unit, and the target transmission unit may be a time-frequency resource in which the target control format indicator information is located.

It should be noted that this embodiment of this application is described by using an example in which the transmit end device maps the target control format indicator information to the target transmission unit and sends the target control format indicator information to the receive end device by using the target transmission unit. In actual application, the target transmission unit sent by the transmit end device to the receive end device may not include the target control format indicator information. For example, the transmit end device sends the target transmission unit shown in FIG. 6 to the receive end device. In the target transmission unit shown in FIG. 6, the downlink control channel may be carried on f subcarriers in the subband 1, and carried on first N/2 symbols in the transmission unit. However, the target transmission unit shown in FIG. 6 does not include the control format indicator channel or the target control format indicator information. In this case, the receive end device cannot determine the target time-frequency resource in the target transmission unit shown in FIG. 6. In this embodiment of this application, to avoid occurrence of this case, when the target transmission unit received by the receive end device does not include the target control format indicator information, the receive end device may determine, as the target control format indicator information, control format indicator information in a transmission unit that is closest to the target transmission unit, and determine the target time-frequency resource in the target transmission unit based on the target control format indicator information. Optionally, the receive end device may determine, as the target control format indicator information, control format indicator information in a transmission unit that is closest to and located before the target transmission unit and that includes control format indicator information. For example, the target transmission unit may be shown in FIG. 6, and the transmission unit that is closest to and located before the target transmission unit and that includes control format indicator information may be shown in FIG. 5. Therefore, the receive end device may determine, as the target control format indicator information, the control format indicator information in the transmission unit shown in FIG. 5, and determine the target time-frequency resource based on the control format indicator information. Details are not described in this embodiment of this application.

Step 305: The receive end device determines the downlink control channel based on the target time-frequency resource.

After determining the target time-frequency resource, the receive end device may determine the downlink control channel based on the target time-frequency resource. Specifically, the receive end device determines the target time-frequency resource as a time-frequency resource in the downlink control channel.

In this embodiment of this application, after determining the downlink control channel, the receive end device may receive the downlink control information based on the downlink control channel. Optionally, the receive end device may perform blind detection on the downlink control information on the downlink control channel, to receive the downlink control information sent by the transmit end device to the receive end device. The downlink control information may be scrambled by using an identifier of the receive end device. The receive end device may perform blind detection on the downlink control information on the downlink control channel based on the identifier of the receive end device, to receive the downlink control information sent by the transmit end device to the receive end device. Herein, the identifier is but is not limited to, for example, a radio network temporary identifier (Radio Network Temporary Identity, RNTI for short) in the LTE. Specifically, the receive end device attempts to parse the downlink control information on the downlink control channel based on the identifier of the receive end device, and then checks the downlink control information. If the check succeeds, the blind detection succeeds, and the receive end device can determine the downlink control information sent by the transmit end device to the receive end device. A specific implementation process in which the receive end device determines, through blind detection, the downlink control information sent by the transmit end device to the receive end device is clearly described in the related technology. Therefore, for the specific implementation process, refer to the related technology. Details are not described in this embodiment of this application.

To sum up, in the transmission control method provided in this embodiment of this application, because the target control format indicator information is used to indicate the target time-frequency resource occupied by the downlink control channel, the time-frequency resource occupied by the downlink control channel can be flexibly adjusted based on the target control format indicator information, to resolve a problem that the time-frequency resource occupied by the downlink control channel cannot be adjusted, and flexibly adjust the time-frequency resource occupied by the downlink control channel.

In the transmission control method provided in this embodiment of this application, because the transmit end device may indicate the time-frequency resource, the transmit end device may indicate different time-frequency resources to different receive end devices or different groups of receive end devices, so that downlink control channels of the different receive end devices or the different groups of receive end devices are distributed in different subbands for FDM or distributed in different symbols for TDM, to reduce interference of downlink control information between different receive end devices or the different groups of receive end devices, and improve receiving reliability of the downlink control information.

In the transmission control method provided in this embodiment of this application, new control format indicator information in a new radio access technology (New Radio access technology, NR for short) system is provided. The control format indicator information can dynamically indicate the time-frequency resource occupied by the downlink control channel. Compared with a control format indicator channel in the LTE, the control format indicator information can more dynamically indicate the time-frequency resource occupied by the downlink control channel, so that the time-frequency resource indicated by the downlink control channel can be adjusted dynamically.

The following are apparatus embodiments of this application. The apparatus embodiments may be used to perform the method embodiment of this application. For details not disclosed in the apparatus embodiments of this application, refer to the method embodiment of this application.

FIG. 12 is a block diagram of a transmission control apparatus 1200 according to an embodiment of this application. The transmission control apparatus 1200 may be a functional unit in the transmit end device 01 in the implementation environment shown in FIG. 1, and configured to perform a part of the method provided in the embodiment of FIG. 3. Referring to FIG. 12, the transmission control apparatus 1200 may include but is not limited to:
a generation module 1210, configured to generate target control format indicator information, where the target control format indicator information is used to indicate a target time-frequency resource occupied by a downlink control channel; and
a sending module 1220, configured to send the target control format indicator information.

Optionally, the target control format indicator information is used to indicate the target time-frequency resource occupied by the downlink control channel in a target transmission unit, and the sending module 1220 is configured to: add the target control format indicator information to the target transmission unit, and send the target control format indicator information by using the target transmission unit.

To sum up, according to the transmission control apparatus provided in this embodiment of this application, because the target control format indicator information is used to indicate the target time-frequency resource occupied by the downlink control channel, a time-frequency resource occupied by the downlink control channel can be flexibly adjusted based on the target control format indicator information, to resolve a problem that the time-frequency resource occupied by the downlink control channel cannot be adjusted, and flexibly adjust the time-frequency resource occupied by the downlink control channel.

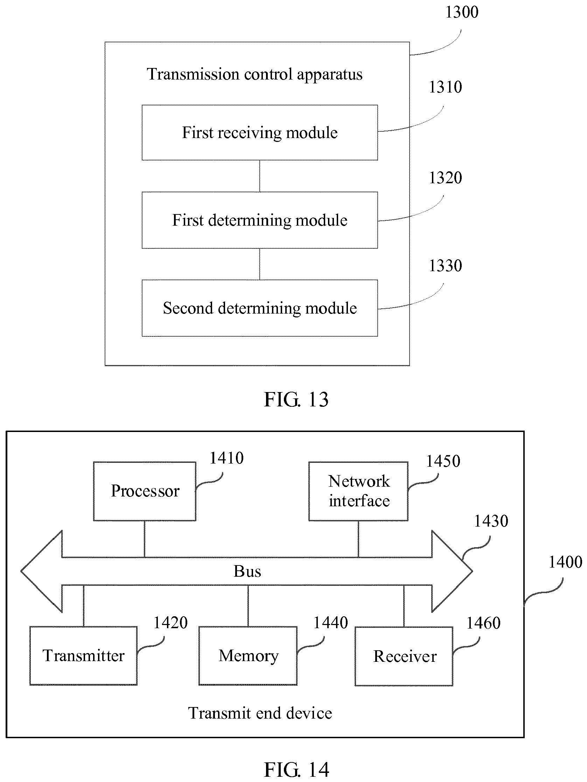

FIG. 13 is a block diagram of another transmission control apparatus 1300 according to an embodiment of this application. The transmission control apparatus 1300 may be a functional unit in the receive end device 02 in the implementation environment shown in FIG. 1, and configured to perform a part of the method provided in the embodiment of FIG. 3. Referring to FIG. 13, the transmission control apparatus 1300 may include but is not limited to:
a receiving module 1310, configured to receive target control format indicator information, where the target control format indicator information is used to indicate a target time-frequency resource occupied by a downlink control channel;
a first determining module 1320, configured to determine the target time-frequency resource based on the target control format indicator information; and
a second determining module 1330, configured to determine the downlink control channel based on the target time-frequency resource.

Optionally, the target control format indicator information is used to indicate the target time-frequency resource occupied by the downlink control channel in a target transmission unit, and the first receiving module 1310 is configured to receive the target control format indicator information by using the target transmission unit.

Optionally, the first determining module 1320 is configured to: when the target transmission unit does not include the target control format indicator information, determine, as the target control format indicator information, control format indicator information in a transmission unit that is closest to the target transmission unit, and determine the target time-frequency resource based on the target control format indicator information.

To sum up, according to the transmission control apparatus provided in this embodiment of this application, because the target control format indicator information is used to indicate the target time-frequency resource occupied by the downlink control channel, a time-frequency resource occupied by the downlink control channel can be flexibly adjusted based on the target control format indicator information, to resolve a problem that the time-frequency resource occupied by the downlink control channel cannot be adjusted, and flexibly adjust the time-frequency resource occupied by the downlink control channel.

It should be noted that when the transmission control apparatuses provided in the foregoing embodiments perform transmission control, only division of the foregoing functional modules is used as an example for description. In an actual application, the foregoing functions may be allocated to different functional modules for implementation based on needs. In other words, an inner structure of a device may be divided into different functional modules, to implement all or some functions described above. In addition, the transmission control apparatuses provided in the foregoing embodiments and the method embodiment belong to a same idea. For specific implementation processes, refer to the method embodiment, and details are not described herein again.

FIG. 14 is a schematic structural diagram of a transmit end device 1400 according to an embodiment of this application. The transmit end device 1400 may be the transmit end device 01 in the implementation environment shown in FIG. 1, and configured to perform a part of the method provided in the embodiment of FIG. 3. Referring to FIG. 14, the transmit end device 1400 may include a processor 1410 and a transmitter 1420. The processor 1410 and the transmitter 1420 are connected by using a bus 1430.

The processor 1410 includes one or more processing cores. The processor 1410 runs a software program and a unit, to perform various function applications and data processing.

Optionally, as shown in FIG. 14, the transmit end device 1400 further includes a memory 1440, a network interface 1450, and a receiver 1460. The memory 1440, the network interface 1450, and the receiver 1460 are separately connected to the transmitter 1420 and the processor 1410 by using the bus 1430.

There may be a plurality of network interfaces 1450, and the network interface 1450 is used by the transmit end device 1400 to communicate with another storage device or a network device. The network interface 1450 is optional. In actual application, the transmit end device 1400 may communicate with another storage device or a network device by using the transmitter 1420 and the receiver 1460. Therefore, the transmit end device 1400 may include no network interface. This is not limited in this embodiment of this application.

The processor 1410 is configured to generate target control format indicator information, where the target control format indicator information is used to indicate a target time-frequency resource occupied by a downlink control channel.

The transmitter 1420 is configured to send the target control format indicator information.

Optionally, the target control format indicator information is used to indicate the target time-frequency resource occupied by the downlink control channel in a target transmission unit, and the transmitter 1420 is configured to: add the target control format indicator information to the target transmission unit, and send the target control format indicator information by using the target transmission unit.

To sum up, according to the transmit end device provided in this embodiment of this application, because the target control format indicator information is used to indicate the target time-frequency resource occupied by the downlink control channel, a time-frequency resource occupied by the downlink control channel can be flexibly adjusted based on the target control format indicator information, to resolve a problem that the time-frequency resource occupied by the downlink control channel cannot be adjusted, and flexibly adjust the time-frequency resource occupied by the downlink control channel.

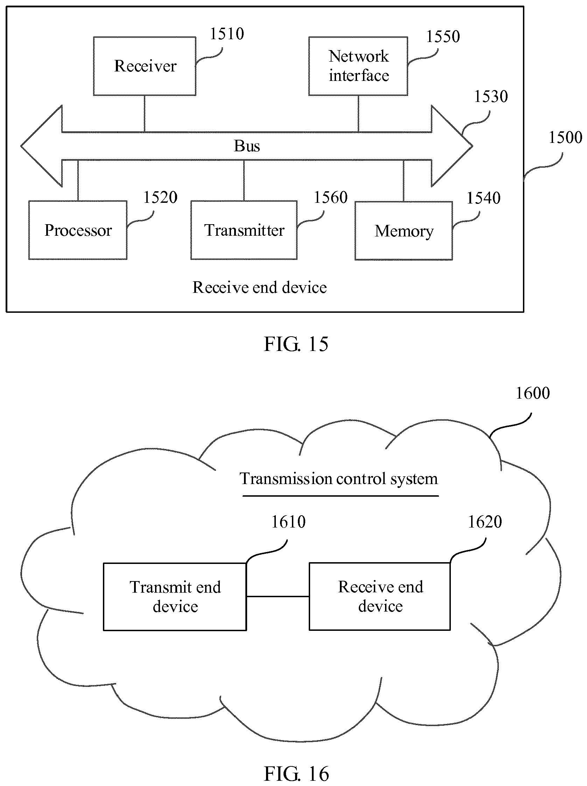

FIG. 15 is a schematic structural diagram of a receive end device 1500 according to an embodiment of this application. The receive end device 1500 may be the receive end device 02 in the implementation environment shown in FIG. 1, and configured to perform a part of the method provided in the embodiment of FIG. 3. Referring to FIG. 15, the receive end device 1500 may include a receiver 1510 and a processor 1520. The receiver 1510 and the processor 1520 are connected by using a bus 1530.

The processor 1520 includes one or more processing cores. The processor 1520 runs a software program and a unit, to perform various function applications and data processing.

Optionally, as shown in FIG. 15, the receive end device 1500 further includes a memory 1540, a network interface 1550, and a transmitter 1560. The memory 1540, the network interface 1550, and the transmitter 1560 are separately connected to the transmitter 1560 and the processor 1520 by using the bus 1530.

There may be a plurality of network interfaces 1550, and the network interface 1550 is used by the receive end device 1500 to communicate with another storage device or a network device. The network interface 1550 is optional. In actual application, the receive end device 1500 may communicate with another storage device or a network device by using the transmitter 1560 and the transmitter 1560. Therefore, the receive end device 1500 may include no network interface. This is not limited in this embodiment of this application.

The receiver 1510 is configured to receive target control format indicator information, where the target control format indicator information is used to indicate a target time-frequency resource occupied by a downlink control channel.

The processor 1520 is configured to determine the target time-frequency resource based on the target control format indicator information.

The processor 1520 is configured to determine the downlink control channel based on the target time-frequency resource.

Optionally, the target control format indicator information is used to indicate the target time-frequency resource occupied by the downlink control channel in a target transmission unit, and the receiver 1510 is configured to receive the target control format indicator information by using the target transmission unit.

Optionally, the processor 1520 is configured to: when the target transmission unit does not include the target control format indicator information, determine, as the target control format indicator information, control format indicator information in a transmission unit that is closest to the target transmission unit, and determine the target time-frequency resource based on the target control format indicator information.

To sum up, according to the receive end device provided in this embodiment of this application, because the target control format indicator information is used to indicate the target time-frequency resource occupied by the downlink control channel, a time-frequency resource occupied by the downlink control channel can be flexibly adjusted based on the target control format indicator information, to resolve a problem that the time-frequency resource occupied by the downlink control channel cannot be adjusted, and flexibly adjust the time-frequency resource occupied by the downlink control channel.

Optionally, in the embodiments shown in FIG. 12 to FIG. 15, a target time resource includes at least one symbol, and the target time-frequency resource includes a target time resource and a target frequency resource.

Optionally, in the embodiments shown in FIG. 12 to FIG. 15, the target frequency resource includes at least one subband, and each of the at least one subband includes at least one subcarrier.

Optionally, in the embodiments shown in FIG. 12 to FIG. 15, each of the at least one subband includes at least two subcarriers, and the at least two subcarriers are consecutive.

Optionally, in the embodiments shown in FIG. 12 to FIG. 15, the at least one subband includes at least two subbands, and the at least two subbands are consecutive.

Optionally, in the embodiments shown in FIG. 12 to FIG. 15, the target frequency resource includes a system bandwidth.

Optionally, in the embodiments shown in FIG. 12 to FIG. 15, the target frequency resource includes a system bandwidth or at least one subband, the system bandwidth is indicated by using a symbol pattern, each of the at least one subband is indicated by using a symbol pattern, and different symbol patterns indicate different subbands.

Optionally, in the embodiments shown in FIG. 12 to FIG. 15, the target time resource includes a preset quantity of symbols in a foremost part of a transmission unit in which the target time resource is located.

Optionally, in the embodiments shown in FIG. 12 to FIG. 15,
the target time-frequency resource is a time-frequency resource shared by user equipments UEs in a target group; or
the target time-frequency resource is a time-frequency resource specific to target UE.

Optionally, in the embodiments shown in FIG. 12 to FIG. 15, the target control format indicator information is located in at least one symbol in the target transmission unit, and the at least one symbol is located in a foremost part of the target transmission unit.

Optionally, in the embodiments shown in FIG. 12 to FIG. 15, the target control format indicator information is located on at least one subband in the target transmission unit, and each of the at least one subband includes at least one subcarrier.

Optionally, in the embodiments shown in FIG. 12 to FIG. 15, the target control format indicator information is located on at least two subbands in the target transmission unit, and the at least two subbands are consecutive or inconsecutive.

Optionally, in the embodiments shown in FIG. 12 to FIG. 15, the target time-frequency resource includes a target frequency resource, the target frequency resource includes at least one subband, each of the at least one subband includes at least one subcarrier, and a subcarrier on which the target control format indicator information is located is a subcarrier in the target frequency resource.

Optionally, in the embodiments shown in FIG. 12 to FIG. 15, the target control format indicator information is located on a preset quantity of subcarriers in the target transmission unit, and a center of the preset quantity of subcarriers overlaps with a center of a frequency band of the target transmission unit.

Optionally, in the embodiments shown in FIG. 12 to FIG. 15, the target control format indicator information is physical layer control format indicator information.

FIG. 16 is a schematic structural diagram of a transmission control system 1600 according to an embodiment of this application. Referring to FIG. 16, the transmission control system 1600 may include a transmit end device 1610 and a receive end device 1620.

In a possible implementation, the transmit end device 1610 includes the transmission control apparatus 1200 shown in FIG. 12, and the receive end device 1620 includes the transmission control apparatus 1300 shown in FIG. 13.

In another possible implementation, the transmit end device 1610 is the transmit end device 1400 shown in FIG. 14, and the receive end device 1620 is the receive end device 1500 shown in FIG. 15.

To sum up, in the transmission control system provided in this embodiment of this application, because target control format indicator information is used to indicate a target time-frequency resource occupied by a downlink control channel, a time-frequency resource occupied by the downlink control channel can be flexibly adjusted based on the target control format indicator information, to resolve a problem that the time-frequency resource occupied by the downlink control channel cannot be adjusted, and flexibly adjust the time-frequency resource occupied by the downlink control channel.

An embodiment of this application further provides a computer readable storage medium. The computer readable storage medium stores an instruction. When the computer readable storage medium runs on a computer, the computer performs the related steps in the transmission control method provided in the embodiment shown in FIG. 3.

An embodiment of this application further provides a computer readable storage medium. The computer readable storage medium stores an instruction. When the computer readable storage medium runs on a computer, the computer performs the related steps in the transmission control method provided in the embodiment shown in FIG. 3.

An embodiment of this application further provides a computer program product including an instruction. When the computer program product runs on a computer, the computer performs the related steps in the transmission control method provided in the embodiment shown in FIG. 3.

An embodiment of this application further provides a computer program product including an instruction. When the computer program product runs on a computer, the computer performs the related steps in the transmission control method provided in the embodiment shown in FIG. 3.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made without departing from the spirit and principle of this application should fall within the protection scope of this application.

## Claims

1. A transmission control method, wherein the method comprises:
generating target control format indicator information, wherein the target control format indicator information is used to indicate a target time-frequency resource occupied by a downlink control channel; and
sending the target control format indicator information.

2. The method according to claim 1, wherein the target time-frequency resource comprises a target time resource and a target frequency resource.

3. The method according to claim 2, wherein the target time resource comprises at least one symbol, the target frequency resource comprises at least one subband, and each of the at least one subband comprises at least one subcarrier.

4. The method according to any one of claims 1 to 3, wherein the target control format indicator information is used to indicate the target time-frequency resource occupied by the downlink control channel in a target transmission unit, the target control format indicator information is located in at least one symbol in the target transmission unit, and the at least one symbol is located in a foremost part of the target transmission unit.

5. The method according to claim 4, wherein
the target control format indicator information is located on at least one subband in the target transmission unit, and each of the at least one subband comprises at least one subcarrier.

6. A transmission control method, wherein the method comprises:
receiving target control format indicator information, wherein the target control format indicator information is used to indicate a target time-frequency resource occupied by a downlink control channel;
determining the target time-frequency resource based on the target control format indicator information; and
determining the downlink control channel based on the target time-frequency resource.

7. The method according to claim 6, wherein the target time-frequency resource comprises a target time resource and a target frequency resource.

8. The method according to claim 7, wherein the target time resource comprises at least one symbol, the target frequency resource comprises at least one subband, and each of the at least one subband comprises at least one subcarrier.

9. The method according to any one of claims 6 to 8, wherein the target control format indicator information is used to indicate the target time-frequency resource occupied by the downlink control channel in a target transmission unit, the target control format indicator information is located in at least one symbol in the target transmission unit, and the at least one symbol is located in a foremost part of the target transmission unit.

10. The method according to claim 9, wherein
the target control format indicator information is located on at least one subband in the target transmission unit, and each of the at least one subband comprises at least one subcarrier.

11. A transmission control apparatus, wherein the apparatus comprises:
a generation module, configured to generate target control format indicator information, wherein the target control format indicator information is used to indicate a target time-frequency resource occupied by a downlink control channel; and
a sending module, configured to send the target control format indicator information.

12. The apparatus according to claim 11, wherein the target time-frequency resource comprises a target time resource and a target frequency resource.

13. The apparatus according to claim 12, wherein the target time resource comprises at least one symbol, the target frequency resource comprises at least one subband, and each of the at least one subband comprises at least one subcarrier.

14. The apparatus according to any one of claims 11 to 13, wherein the target control format indicator information is used to indicate the target time-frequency resource occupied by the downlink control channel in a target transmission unit, the target control format indicator information is located in at least one symbol in the target transmission unit, and the at least one symbol is located in a foremost part of the target transmission unit.

15. The apparatus according to claim 14, wherein
the target control format indicator information is located on at least one subband in the target transmission unit, and each of the at least one subband comprises at least one subcarrier.

16. A transmission control apparatus, wherein the apparatus comprises:
a receiving module, configured to receive target control format indicator information, wherein the target control format indicator information is used to indicate a target time-frequency resource occupied by a downlink control channel;
a first determining module, configured to determine the target time-frequency resource based on the target control format indicator information; and
a second determining module, configured to determine the downlink control channel based on the target time-frequency resource.

17. The apparatus according to claim 16, wherein the target time-frequency resource comprises a target time resource and a target frequency resource.

18. The apparatus according to claim 17, wherein the target time resource comprises at least one symbol, the target frequency resource comprises at least one subband, and each of the at least one subband comprises at least one subcarrier.

19. The apparatus according to any one of claims 16 to 18, wherein the target control format indicator information is used to indicate the target time-frequency resource occupied by the downlink control channel in a target transmission unit, the target control format indicator information is located in at least one symbol in the target transmission unit, and the at least one symbol is located in a foremost part of the target transmission unit.

20. The apparatus according to claim 19, wherein
the target control format indicator information is located on at least one subband in the target transmission unit, and each of the at least one subband comprises at least one subcarrier.

21. A transmission control system, wherein the transmission control system comprises the transmission control apparatus according to any one of claims 11 to 15 and the transmission control apparatus according to any one of claims 16 to 20.

22. A transmit end device, wherein the transmit end device comprises a processor, a network interface, a memory, and a bus, the memory and the network interface are separately connected to the processor by using the bus, the processor is configured to execute an instruction stored in the memory, and the processor executes the instruction to implement the transmission control method according to any one of claims 1 to 5.

23. A receive end device, wherein the receive end device comprises a processor, a network interface, a memory, and a bus, the memory and the network interface are separately connected to the processor by using the bus, the processor is configured to execute an instruction stored in the memory, and the processor executes the instruction to implement the transmission control method according to any one of claims 6 to 10.

24. A transmission control system, wherein the transmission control system comprises the transmit end device according to claim 22 and the receive end device according to claim 23.

25. A computer readable storage medium, wherein the computer readable storage medium stores an instruction, and when the computer readable storage medium runs on a computer, the computer performs the transmission control method according to any one of claims 1 to 5.

26. A computer readable storage medium, wherein the computer readable storage medium stores an instruction, and when the computer readable storage medium runs on a computer, the computer performs the transmission control method according to any one of claims 6 to 10.

27. A computer program product comprising an instruction, wherein when the computer program product runs on a computer, the computer performs the transmission control method according to any one of claims 1 to 5.

28. A computer program product comprising an instruction, wherein when the computer program product runs on a computer, the computer performs the transmission control method according to any one of claims 6 to 10.
